# EUROPÄISCHE PATENTSCHRIFT

(11) **EP 3 852 948 B1**
(45) Veröffentlichungstag und Bekanntmachung des Hinweises auf die Patenterteilung: **12.11.2025**
(21) Anmeldenummer: 19778447.3
(22) Anmeldetag: 19.09.2019
(51) Int. Cl.: B23P 15/00, H02K 15/0407, H02K 15/043, B22D 25/02, B21J 5/00, B22C 7/02

(54) **VERFAHREN ZUR HERSTELLUNG EINES WENDELFÖRMIGEN METALLKÖRPERS**
METHOD FOR PRODUCING A HELICAL METAL BODY
PROCÉDÉ DE FABRICATION D'UN CORPS MÉTALLIQUE HÉLICOÏDAL

(30) Priorität: 19.09.2018 DE 102018215977
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: WÖSTMANN, Franz-Josef, 28359 Bremen (DE); HEUSER, Michael, 28359 Bremen (DE); BUSSE, Matthias, 28359 Bremen (DE); THIELKE, Joachim, 31275 Lehrte (DE)
(74) Vertreter: Pfenning, Meinig & Partner mbB
(86) Internationale Anmeldenummer: PCT/EP2019/075197
(87) Internationale Veröffentlichungsnummer: WO 2020/058416

(56) Entgegenhaltungen:
- EP-A2- 2 387 135
- DE-A1- 102012 212 637
- DE-A1- 102014 222 468
- JP-A- 2009 153 287
- GRONINGER M ET AL: "Casting production of coils for electrical machines", ELECTRIC DRIVES PRODUCTION CONFERENCE (EDPC), 2011 1ST INTERNATIONAL, IEEE, 28 September 2011 (2011-09-28), pages 159 - 161, XP032000385, ISBN: 978-1-4577-1371-2, DOI: 10.1109/EDPC.2011.6085534

## Beschreibung

Die Erfindung liegt auf dem Gebiet des Maschinenbaus und der Produktionstechnik, insbesondere der Gießereitechnik. Sie kann mit besonderem Vorteil bei der Herstellung von Spulen, Spiralen oder Federn Verwendung finden.

Bei elektrischen Maschinen kommen gewickelte Spulen zum Einsatz. Die so hergestellten Spulen füllen den zur Verfügung stehenden Bauraum nur anteilig aus. Daraus resultiert eine geringere Leistungs- bzw. Drehmomentdichte der elektrischen Maschinen bezogen auf das Gewicht oder den Bauraum. Gegossene Al- und Cu-Spulen können diesen Nachteil ausgleichen, jedoch sind bisher keine serientauglichen Verfahren zur Herstellung von gegossenen Al- und Cu-Spulen oder gegossenen Spulen aus Al- und Cu-Legierungen in Dauerformen mit ausreichenden Standzeiten bekannt.

Zur Steigerung der Leistungsdichte oder der Drehmomentdichte elektrischer Maschinen werden bisher aufwendige, oftmals manuell hergestellte Spulen gewickelt, um den Füllgrad noch geringfügig gegenüber Serienverfahren zu verbessern. Über der Höhe der Wicklungen wird dabei Draht mit gleichem Querschnitt verwendet. Weiterhin verschlechtern bei konventionellen elektrischen Maschinen die von innen nach außen aufeinanderliegenden Windungen der Spule die Wärmeabfuhr und führen zu stärkerer Erwärmung der Spulen und damit zu einer notwendigen Begrenzung der maximalen Stromdichte bezogen auf den Querschnitt der Wicklung.

Gegossene Al- und Cu-Spulen oder gegossene Spulen aus Al und Cu-Legierungen sind bereits bekannt, werden jedoch bisher nicht in Dauerformen, sondern in verlorenen Form wie z. B. im Feinguss oder im Lost-Foam-Verfahren oder durch den Einsatz von Salzkernen hergestellt, die die Kontur vorgeben und den direkten Kontakt der Schmelze mit dem Werkzeug verhindern.

Für die Herstellung verschiedenster Geometrien Wird nach dem Stand der Technik eine konturgebende Form eingesetzt. Bei komplexen Geometrien werden ergänzend zu der Form, die über eine oder mehrere Teilungen für eine einfache Gussteilentnahme verfügt, Kerne eingelegt oder Schieber verwendet.

Bei der Herstellung von Kupferbauteilen ergeben sich dabei durch die hohe Gießtemperatur, oberhalb von 1100°C, erhöhte Anforderungen an Werkzeug und Kern. Die thermische Beanspruchung und insbesondere der Temperaturschock während der Formfüllung führen zu einer geringen Werkzeugstandzeit und zu einer Begrenzung der Bauteilqualität oder zur Notwendigkeit von aufwendiger Nachbearbeitung.

Bisherige Werkzeugkonzepte führten stets zu geometrisch komplexen Dauerformen oder zum zusätzlichen Einsatz von beweglichen Schiebern oder Kernen (permanente oder non-permanente). Solche Formen konnten lediglich im Laborbetrieb eingesetzt werden, weil ein großer Aufwand für Wartung der Formen erforderlich war und zusätzlich hohe Ausschussquoten vorlagen.

Aus einer Patentanmeldung EP 2 819 276 A2 ist eine geometrisch abgewandelte Modellgeometrie bekannt, die eine einfach geformte zweigeteilte Dauerform für den Gießprozess ermöglicht. Dies wird dadurch erreicht, dass die Windungen jeweils um 180° verdreht und somit die geometrische Komplexität der Spule erheblich reduziert wird. Dort ist jedoch nach der gießtechnischen Herstellung ein höchst komplexer umformender Prozess erforderlich, um zur Spulengeometrie im Einbauzustand zu gelangen.

Dokument DE 10 2012 212637 A1 zeigt eine Spule für eine elektrische Einrichtung, insbesondere elektrische Maschine zum Anordnen um wenigstens einen ein magnetisches Feld führenden ersten Kern mit einer in Richtung des magnetischen Feldes verlaufenden Spulenlängsachse, wobei die Spule mehrere, aus einem elektrisch leitfähigen Spulenmaterial gegossene Windungen aufweist und die Windungen und/oder Windungsabschnitte abhängig ihrer Position in Spulenlängsrichtung Querschnittsflächen unterschiedlicher Größen und/oder unterschiedlicher Formen aufweisen.

Groninger M. et al. beschreiben in "Casting production of coils for electrical machines", ELECTRIC DRIVES PRODUCTION CONFERENCE (EDPC), 2011 1ST INTERNATIONAL, IEEE, 28. September 2011 (2011-09-28), Seiten 159-161, XP032000385, DOI: 10.1109/EDPC.2011.6085534; ISBN: 978-1-4577-1371-2, dass Spulen im Gießverfahren hergestellt werden. Dabei werden die Spulen aus Flachleitern gebildet, die übereinander liegen. Verglichen mit der endgültigen Geometrie ist das Positivmodell der Spule gestreckt und hat einen definierten Abstand zwischen den einzelnen Windungen, der größer ist als die Dicke der Isolierschicht. Dies ermöglicht den Gießprozess und die anschließende Isolierung der Spulen. Danach wird die Spule komprimiert, um die endgültige Geometrie zu erreichen.

Die Druckschrift DE 10 2014 222468 A1 betrifft ein Verfahren zum Herstellen wenigstens einer, mehrere Windungen und wenigstens zwei Schenkel aufweisenden Spule für eine elektrische Maschine, umfassend zumindest die folgenden Schritte: Bereitstellen eines drahtförmigen Ausgangswerkstücks; Wickeln des drahtförmigen Ausgangswerkstücks zu einer Ausgangsspule, so dass mehrere Windungen und wenigstens zwei Schenkel gebildet sind; Anordnen des gewickelten drahtförmigen Ausgangswerkstücks in einem ringförmigen Spalt eines ersten Umformwerkzeugs; Umformen des drahtförmigen Ausgangswerkstücks in wenigstens einem Umformschritt zu einem Werkstück mit einem der folgenden Verfahren i. Fließpressen oder ii. Schmieden; wobei ein Stempel in den ringförmigen Spalt des ersten Umformwerkzeugs eingeführt wird und sich das Ausgangswerkstück infolge der Umformung an einer inneren Umfangsfläche und an einer äußeren Umfangsfläche des ringförmigen Spalts anlegt.

Die Druckschrift JP 2009 153287 A widmet sich der Bereitstellung einer geformten Spule, die den Montageprozess und die Anzahl der Teile reduziert und eine hohe Wärmeableitung aufweist. Beschreiben ist: eine Vielzahl von Spulen, die entlang eines Kreisbogens angeordnet sind, ein Harzformabschnitt, der ausgebildet ist, um die obigen Spulen einzubetten und zu verbinden, Verbindungsanschlussabschnitte, die von dem obigen Harzformabschnitt freigelegt sind, und Löcher, die im Inneren jeder Spule ausgebildet sind, um Kerne aus magnetischer Substanz darin einzufügen.

Die Druckschrift EP 2 387 135 A2 bezieht sich auf ein Verfahren zum Herstellen einer elektrotechnischen Spule mit einer oder mehrerer Wicklung(en), wobei eine eine Spulengeometrie enthaltende Negativform, insbesondere eine verlorene Form oder eine Dauerform, bereitgestellt oder hergestellt wird, wobei ein zur Ausbildung der Wicklung(en) geeignetes Spulenmaterial, insbesondere ein elektrisch leitfähiges Metall, in flüssiger Form in diese Negativform gegossen wird, und wobei dieses Spulenmaterial erstarrt wird und/oder man dieses Spulenmaterial unter kontrollierte Bedingungen erstarren lässt. Darüber hinaus bezieht sich die Erfindung auf entsprechend hergestellte Spulen.

Der vorliegenden Erfindung liegt die Aufgabe zugrunde, ein einfaches Herstellverfahren für gewendelte Metallkörper zu schaffen, das einen wirtschaftlichen Einsatz von Gießformen erlaubt und dabei einen hohen Füllgrad der Wendel ermöglicht.

Die Aufgabe wird gemäß der Erfindung durch ein Verfahren mit dem Merkmalen des Patentanspruchs 1 gelöst, die Patentansprüche 2 bis 6 stellen Ausgestaltungen des Verfahrens vor.

Demgemäß bezieht sich die Erfindung auf ein Verfahren zur Herstellung eines wendelförmigen Metallkörpers, bei dem zuerst ein vorgeformter, wendelförmiger Metallkörper durch ein Gießverfahren in einer Form hergestellt und darauf durch Verformung entlang seiner Längsachse komprimiert wird.

Die Erfindung erlaubt die Herstellung eines wendelförmigen Körpers durch Gießen, wobei die Gussform durch einen genügend großen Abstand zwischen einzelnen Wendelgängen relativ dickwandig ausgestaltet werden kann. Die Verformung des Metallkörpers nach dem Gießvorgang lässt bei der Gestaltung der Form, die durch Gießen hergestellt wird, Spielräume. Nach dem Gießen kann dann die Zielform des Metallkörpers durch Verformung erreicht werden, wobei bei der Zielform zwischen den einzelnen Gängen der Wendel wesentlich kleinere Zwischenräume erreicht werden können, die gusstechnisch durch die Grenzen, die der Gussform gesetzt sind, kaum oder nur sehr schwierig erreichbar sind.

Das Verfahren beinhaltet weiter, dass der Metallkörper nach dem Gießen zumindest teilweise durch plastische Verformung entlang seiner Längsachse komprimiert wird.

Eine plastische Verformung des Metallkörpers stellt sicher, dass seine Zielform stabil ist und ohne Fixierungsmittel beibehalten wird.

Das Verfahren kann weiter dadurch ausgestaltet werden, dass der Metallkörper nach dem Gießen und vor dem Komprimieren bearbeitet wird, insbesondere durch Schleifen und/oder Polieren und/oder Beschichten.

Dadurch, dass beispielsweise die Zwischenräume zwischen den Wendelgängen und auch andere Teile des Metallkörpers im vorgeformten Zustand nach dem Gießen besser zugänglich sind als nach dem Erreichen der Zielform, lassen sich die genannten Bearbeitungsschritte vor der Verformung/Kompression des Metallkörpers in die Zielform besonders komfortabel durchführen.

Das Verfahren kann weiter dadurch ausgestaltet werden, dass zum Komprimieren des wendelförmigen Metallkörpers dieser auf einen Dorn mit einem freien Ende und einer ersten Anschlagschulter aufgeschoben wird und dass das freie Ende des Dorns in eine Aufnahme mit einer zweiten Anschlagschulter soweit eingeschoben wird, dass der Metallkörper zwischen den Anschlagschultern komprimiert wird.

Da der Metallkörper auch in der Form, die er mit dem Gießvorgang annimmt, bereits wendelförmig ausgestaltet ist, kann er leicht auf einen Dorn aufgeschoben und dort in Richtung der Längsachse der Wendel komprimiert werden. Hierzu dient auf der Seite des Dorns eine erste Anschlagschulter. Die Aufnahme weist beispielsweise eine Öffnung auf, in die der Dorn, nicht aber der Metallkörper hineingeschoben werden kann. An der Öffnung kann dann die zweite Anschlagschulter vorgesehen sein. Beim Einschieben des Dorns in die Öffnung der Aufnahme wird dann der wendelförmige Metallkörper zwischen der ersten und der zweiten Metallschulter in Längsrichtung bis zur Zielform oder auch darüber hinaus komprimiert.

Das Verfahren ist dadurch gekennzeichnet, dass bei der Herstellung des vorgeformten Metallkörpers in jeder Windung der Wendel wenigstens eine, insbesondere wenigstens zwei Verformungsbereiche durch eine Materialquerschnittsverengung vorgesehen oder erzeugt werden, die beim Komprimieren des Körpers zuerst plastisch verformt werden.

Die Verformungsbereiche können bei einer im Querschnitt rechteckigen Spulenförmigen Wendel jeweils an den kürzeren oder auch an den längeren Seiten der einzelnen Gänge/Windungen der Wendel vorgesehen sein oder an den Ecken der einzelnen Windungen der Wendel. Die Querschnittsverengungen können bereits in der Gussform des Metallkörpers vorgesehen sein.

Das Verfahren kann weiter dadurch ausgestaltet werden, dass der Metallkörper nach dem Komprimieren durch Fixierungsmittel bezüglich seiner Länge fixiert wird.

Das Fixieren kann beispielsweise durch Tauchen in einen Beschichtungswerkstoff oder Vergießen oder durch Anbringen einer äußeren mechanischen Spange/Klammer erfolgen, die die Windungen der Wendel axial zusammenhält, Die Spange/Klammer muß dann entweder aus einem nicht leitenden Material bestehen oder von dem Metallkörper elektrisch isoliert sein.

Das Verfahren kann weiter dadurch ausgestaltet werden, dass zunächst ein verlorener Modellkörper, insbesondere aus einem nicht metallischen Material, in der gewünschten Zielform des komprimierten gewendelten Metallkörpers hergestellt wird, dass der Modellkörper durch eine Vorverformung entlang der Längsachse expandiert wird und dass der expandierte Modellkörper als Positivform für das Gießen des vorgeformten Metallkörpers verwendet wird, insbesondere durch Herstellen einer Form für das Gießverfahren mithilfe des Modellkörpers oder durch Verwendung in einem Ausschmelzverfahren.

Der Modellkörper wird somit nach seiner Herstellung vorverformt, indem die Wendel in Axialrichtung expandiert wird. An dem Modellkörper können auch bereits Querschnittseinengungen vorgesehen sein, um geschwächte Verformungsbereiche an dem später gegossenen Metallkörper vorzusehen. Von diesem vorverformten Modellkörper wird dann der Metallkörper abgeformt und gegebenenfalls bearbeitet. Danach wird der Metallkörper durch Kompression in seine Zielform gebracht.

Beschrieben wird auch eine Vorrichtung zur Herstellung eines gewendelten Metallkörpers der oben beschriebenen Art mit einem Dorn, der ein freies Ende sowie von dem freien Ende beabstandet eine erste Anschlagschulter aufweist, die derart dimensioniert ist, dass sie einen Anschlag für einen auf den Dorn aufgeschobenen gewendelten Metallkörper bildet und mit einer Aufnahme, die eine Öffnung zum Einschieben des freien Endes des Dorns sowie eine die Öffnung umgebende zweite Anschlagschulter für den Metallkörper aufweist.

Die Vorrichtung kann dadurch ausgestaltet werden, dass der Dorn im Bereich der ersten Anschlagschulter Außenmaße aufweist, die eine formschlüssige Aufnahme des vorgeformten Metallkörpers ermöglichen und dass der Dorn sich zu seinem freien Ende hin in wenigstens einer ersten Ausdehnungsrichtung seines Querschnittes verjüngt. Der Dorn kann vorteilhaft die Form und Größe der zentralen durchgehenden axialen Öffnung in der Zielform des Metallkörpers aufweisen. Zum besseren Einfädeln in den Metallkörper vor seiner endgültigen Verformung weist der Dorn an seinem freien Ende eine Zuspitzung/Verjüngung auf. Die erste Anschlagschulter kann als Flansch auf dem Dorn ausgebildet sein.

Die Vorrichtung kann weiter dadurch ausgestaltet werden, dass durch die Formgebung des Dorns und der Aufnahme ein Längsanschlag für das Einschieben des Dorns in die Aufnahme gebildet ist, der die Länge des komprimierten wendelförmigen Metallkörpers festlegt.

Im Folgenden wird die Erfindung anhand von Ausführungsbeispielen in Figuren einer Zeichnung gezeigt und anschließend erläutert. Dabei zeigt
- Fig. 1: eine perspektivische Darstellung eines wendelförmigen Körpers,
- Fig. 2: in drei aufeinander folgenden Stadien einen wendelförmigen Körper, der entlang der Längsachse der Wendel komprimiert wird,
- Fig. 3: in drei aufeinander folgenden Stadien einen wendelförmigen Körper, der entlang der Längsachse der Wendel auf einem Dorn einer Bearbeitungsvorrichtung zwischen zwei anschlagschultern komprimiert wird,
- Fig. 4: einen wendelförmigen Körper mit eingezeichneten Verformungsbereichen, sowie
- Fig. 5: schematisch den Herstellungsprozess bei Verwendung eines Modellkörpers.

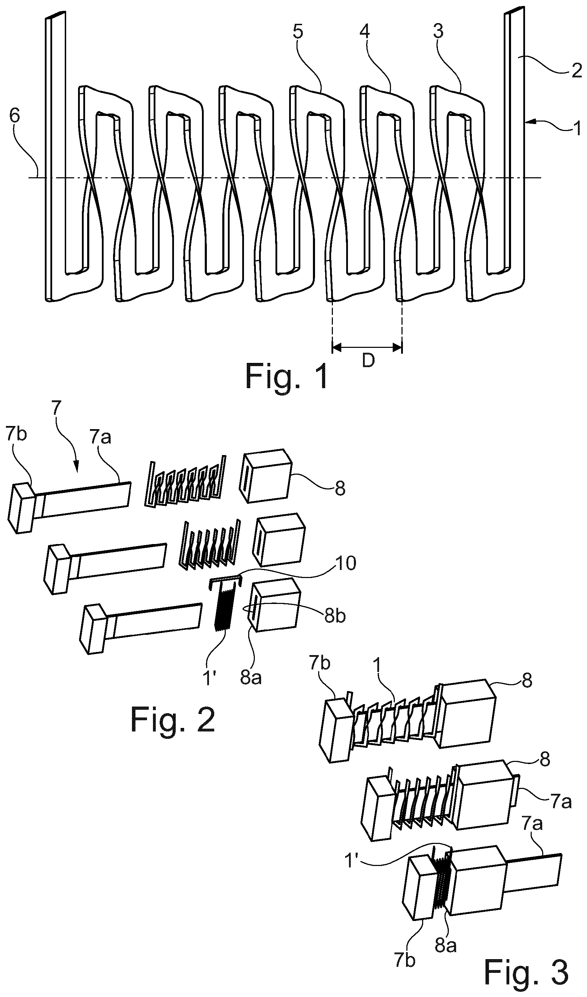

Im Folgenden wird die Herstellung von verlorenen Modellen für den Einsatz im Feinguss mittels eines einfachen Werkzeugkonzeptes beschrieben. Die Komplexität der Spulengeometrie für das verlorene Modell wird gezielt durch plastische Umformung des Wickelkopfes in Kombination mit einer Verdrehung der langen Windungsseite um <=90° reduziert, um den Einsatz eines einfachen zweigeteilten Werkzeugkonzeptes für die Herstellung von Gussteilen (u. a. Metalldruckgießen, Niederdruckgießen, Kokillengießen, Metallpulverspritzguss) oder Modellplatten oder verlorenen Modellen (u.a. im Wachsspritzgie-ßen, im Sandguss, Sandguss mit Disamatic, EPS-Modelle für Lost Foam) zu ermöglichen. Hierzu werden einerseits der Wickelkopf und die Windung (lange Lamellen) bei einem Modellkörper derart umgeformt, dass sie die in Figur 1 dargestellte Form annehmen. Die Figur 1 stellt die Form eines Modellkörpers dar, der zunächst die Zielform des wendelförmigen Metallkörpers aufweisen kann und danach zur Formgebung der Gussform für den Metallkörper durch Expansion entlang der Längsachse 6 vorverformt wird. Jedoch entspricht diese Form auch der eines wendelförmigen Metallkörpers nach dem Gießen und vor dem Komprimieren in Längsrichtung 6.Es sind die Anschlüsse am Wickelkopf 2 sowie die einzelnen Windungen 3, 4, 5 der Wendel dargestellt. Für den Gießvorgang des herzustellenden Metallkörpers weisen die einzelnen Windungen der Wendel den vergrößerten Abstand D auf. Hierdurch werden filigrane und komplexe Bereiche beim Formdesign vermieden.

Somit wird ein robustes, wartungsfreundliches Konzept für jegliche Art von Steckspulen realisiert.

Durch die Vorverformung am Wickelkopf und Verdrehung in der Windung am Modell wird die großserientaugliche Fertigung von Gussspulen in Dauerformverfahren und verlorenen Modellen sowie verlorenen Formen ermöglicht. Nach dem Gießprozess kann das Gießsystem zur Zuführung der Schmelze für folgenden Prozessschritt als Handlinghilfe am Gussteil erhalten bleiben. Dies hat insbesondere den Vorteil, dass der eigentlichen Gussartikel, der oftmals aus Reinaluminium (R99,7 oder ähnlich) oder E-Kupfer besteht und eine sehr geringe Festigkeit sowie hohe Duktilität aufweist, vor zusätzlicher plastischer Verformung geschützt wird. Die Gussspule wird in der vorverformten Lage fixiert, die für die folgenden nachgelagerten Prozessschritte sehr vorteilhaft ist und automatisierte Prozesse ermöglicht. Insbesondere Prozessschritte wie Entgraten, Polieren, Reinigen, Schleifen und Beschichtungsverfahren werden durch die bessere Zugänglichkeit aufgrund der vorverformten Spule mit erhöhtem Windungsabstand erheblich vereinfacht. Die nachgelagerten Prozesse können vor oder nach der Entfernung des Gießsystems oder erst nach weiteren nachgelagerten Prozessschritten (Schleifen, Polieren und Beschichtung zur elektrischen Isolation) erfolgen. Ein zusätzlicher Vorteil dieser Geometrievariante ist der einfache Umformprozess nach dem Gießen durch Einschieben eines Führungsstabes in die Seele der Windung/Wendel und das direkte Umformen der Windungen aufeinander.

Dies wird durch das Einfädeln eines Dorn mit einer Anschlagschulter erreicht, wie in Figur 2 dargestellt. Figur 2 zeigt in drei aufeinander folgenden Stadien von oben nach unten drei verschiedene Kompressionsstufen des wendelförmigen Metallkörpers, wobei oben eine unkomprimierte Form , in der Mitte eine teilweise komprimierte Form und unten eine voll entlang der Längsachse komprimierte Form des wendelförmigen Metallkörpers 1' dargestellt ist. Auf der linken Seite des Metallkörpers ist jeweils ein Dorn 7 mit einem freien Ende 7a und einer ersten Anschlagschulter 7b dargestellt, während auf der rechten Seite jeweils eine Aufnahme 8 mit einer zweiten Anschlagschulter 8a und einer Öffnung 8b zur Aufnahme des freien Endes 7a des Dorns 7 gezeigt ist.

Der Metallkörper (1') kann entweder durch plastische Verformung nach der Kompression in der in Figur 2 unten verkürzten Zielform verbleiben, oder er kann durch Fixiermitttel 10 komprimiert gehalten werden. Solche Fixiermittel können beispielsweise aus einer mechanischen Spange/Klammer 10 bestehen. Der Metallkörper kann jedoch auch beispielsweise durch Verkleben mit einem Isolierwerkstoff fixiert werden, der gleichzeitig die Windungen der Wendel voneinander isoliert.

Figur 3 zeigt untereinander in drei verschiedenen Stadien das Einschieben eines Dorns 7 in einen wendelförmigen Metallkörper 1 und dabei die fortschreitende Kompression des wendelförmigen Metallkörpers in Richtung seiner Längsachse 6, die parallel zur Längsachse des Dorns 7 verläuft. Mithilfe des Dorns 7 und der Aufnahme 8 wird die Spule in den Zielzustand/Einbauzustand verformt. Hierbei kann Umformprozess und Kalibrierung kombiniert werden. Die Kompression kann soweit fortgeführt werden, dass nach einer Entspannung von elastischen Verformungsanteilen durch die verbleibende plastische Verformung die Zielform erreicht wird. Der Dorn ist an seinem freien Ende 7a dünn zur Vereinfachung des Einfädelns und wird zur ersten Anschlagschulter 7b hin dicker und entspricht dort mit seinem Querschnitt der Endkontur des Innenraums der Wendel. Idealerweise hat die Endkontur des Innenraums der Wendel mindestens die gleiche Höhe wie die Spule/der wendelförmige Metallkörper in seiner Zielform.

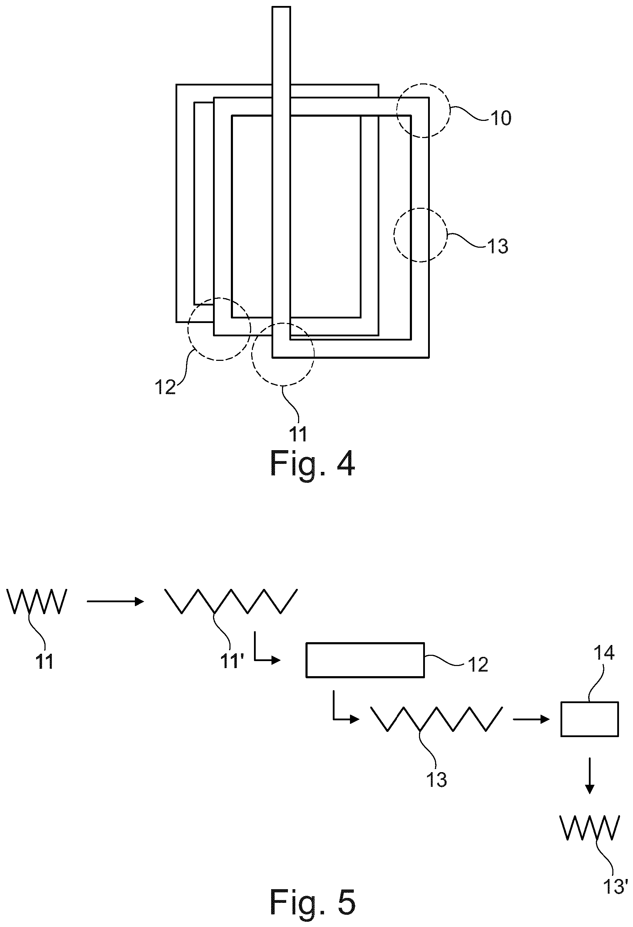

In der Figur 4 ist gezeigt, dass an bestimmten Stellen des wendelförmigen Metallkörpers Verformungsbereiche 10, 11, 12, 13 vorgesehen sind, die im Materialquerschnitt vermindert sind, um an diesen Stellen bereits bei einer geringen Verformung den elastischen Verformungsbereich verlassen und zu einer plastischen Verformung überzugehen. Damit wird der Anteil der elastischen Verformung bei der Kompression des Metallkörpers verringert und die Zielform kann besser vorausgeschätzt und erreicht werden. Die Verformungsbereiche können beispielsweise an den Ecken der Windungen oder auch auf den geraden Abschnitten der Windungen vorgesehen sein.

In der Figur 5 ist zunächst schematisch ein in der Zielform gefertigter Modellkörper 11 dargestellt. Dieser wird zu einem in Längsrichtung expandierten vorverformten Modellkörper 11' verändert und dann mittels eines Abformungsprozesses in einen Metallkörper 13 in ebenfalls expandierter Form übersetzt. Dieser kann dann in potenziellen Arbeitsschritten 14 bearbeitet werden, beispielsweise durch Entgraten und/oder Beschichten und wird darauf zu dem Metallkörper 13' komprimiert.

Durch die Kombination von dem gegenüber der Zielform vor-verformten Wickelkopf und einer Verdrehung der Windung im vor-verformten Zustand um weniger als 90 Grad gegenüber der Zielform werden folgende Vorteile erzielt: Durch die kombinierte und variable Anpassung der Modifikation des Wickelkopfes und gleichzeitige Verdrehung der Spule um einen Winkel, der kleiner ist als 90° kann das Werkzeugkonzept für jegliche Art und Größe von Steckspulen eingesetzt werden. Es sind keine Ausformschrägen an relevanten Stellen an den Windungen erforderlich (parallelflankige und nicht parallelflankige Windungen realisierbar), dadurch wird eine fertigungsbedingte Verringerung des Nutfüllfaktors vermieden. Die vorverformte Spule kann durch einfaches Zusammenschieben mit Hilfe eine Dorns in den Einbauzustand umgeformt werden. Die Dorngeometrie kann dabei so gestaltet sein, dass mit dem Umformen direkt eine Kalibrierung in die Endgeometrie umgesetzt wird. Eine geringe Sprengfläche des Werkzeugs ermöglicht den Einsatz kleinerer Spritzmaschinen, kleinere Werkzeuge oder Mehrfachkavitäten.

Die Erfindung kann bei der Herstellung von Gussspulen in verschiedensten Größen genutzt werden (z. B. werden kleine Geometrien wie bei Lenkungsmotoren benötigt für Dauerformen in Al-Druckguss oder MIM für Cu-Spulen; große Spulen können im Lost Foam oder Sandguss hergestellt werden.)

Ein weiterer Vorteil der Erfindung ist wahlweise die Möglichkeit der Nutzung von Schalenfeinguss anstatt Nutzung von Blockformverfahren. Dies wird durch die Vorverformung ermöglicht.

Zwischen den einzelnen Windungen wird bei der Gussform genug Platz geschaffen, um den Schalenaufbau im Feinguss zu ermöglichen. Das Problem des Aufeinanderzuwachsens der Schalen der Form bei dünnwandigen Formen / bei zu geringen Abstand der einzelnen Wendelgänge wird vermieden.

Beim Gießen entstehende Grate an dem gewendelten Metallkörper sind vor der endgültigen Verformung gut zugänglich und können beispielsweise auch automatisiert entfernt werden.

Eine durch die Erfindung verwendbare geschlossene Schale/Keramikform beim Feinguss und bei Verfahren mit verlorenen Modellen (Lost Foam) ermöglicht jeweils die Herstellung eines gratfreien Gussteils mit hervorragender Oberfläche; lediglich das Gießsystem muss abgetrennt und nachbearbeitet werden. Die einzelnen Prozessschritte sind dabei insbesondere für die Serienproduktion automatisierbar.

Durch die Erfindung wird es möglich, Gussspulen mit Werkstoffen wie AI und Cu oder Al- und Cu-Legierungen in Großserien herzustellen und damit die Produktivität, Gestaltungsfreiheit und Wirtschaftlichkeit im Serieneinsatz deutlich zu erhöhen. Weiterhin lassen sich mit der beschriebenen Vorgehensweise andere gießtechnisch zu verarbeitende Materialien in eine wendelförmige Geometrie bringen. Weiterhin lassen sich unterschiedliche Wendeln mit verschiedenen Windungszahlen, Windungsdicken und Windungsbreiten in einer Außenform mit wahlweise verschiedenen Inneneinsätzen, beispielsweise aus Keramikmaterial, herstellen, es wird damit eine Variantengestaltung ermöglicht. Mit der vorliegenden Erfindung wird somit ein wesentlicher Beitrag zur wirtschaftlichen Herstellung von Wendeln, z. B. für die Anwendung als Spule in elektrischen Maschinen geleistet und es werden neue Fertigungsverfahren für elektrischer Maschinen mit gegenüber dem Stand der Technik höherer Leistungsdichte und höherem Wirkungsgrad erschlossen. Durch Einsatz des innovativen Konzeptes zur Herstellung von Wendeln/ Spulen oder Modellen für Spulen oder verloren Formen für Spulen in geometrisch einfach geformten Werkzeugen werden robuste und automatisierbare Fertigungsprozesse für Großserien ermöglicht.

Ergänzend zu den konventionellen Giessverfahren wie Druckguss, Niederdruckguss, Sandguss, Lost Foam Kernpaket-Verfahren, Schwerkraftguss, Kippkokillengiessen, Feinguss und den verschiedenen Derivaten kann die Geometrie eingesetzt werden, um in Werkzeug mit der beschriebenen Kontur in eine Hälfte die Schmelze einzugiessen, das Werkzeug zu schliessen und damit analog zu einem Waffeleisen die Schmelze in der Kontur zu verteilen.

Einfache visuelle Untersuchungen der Gusskörper und eine metallografische Analyse geben Aufschluss über die fertigungsbedingte Historie und Herstellungsart der Gussteile. Insbesondere plastisch umgeformten Bereich in der Windung und dem Wickelkopf können metallografisch nachgewiesen werden.

## Patentansprüche

1. Verfahren zur Herstellung eines wendelförmigen Metallkörpers (1'), bei dem zuerst ein vorgeformter, wendelförmiger Metallkörper (1, 13) durch ein Gießverfahren in einer Form hergestellt und darauf durch Verformung entlang seiner Längsachse (6) komprimiert wird, wobei bei der Herstellung des vorgeformten Metallkörpers (1, 13) in jeder Windung (3, 4, 5) der Wendel wenigstens ein, insbesondere wenigstens zwei Verformungsbereiche (10, 11, 12 13) vorgesehen oder erzeugt werden, die beim Komprimieren des Metallkörpers zuerst plastisch verformt werden, wobei der wenigstens eine Verformungsbereich in jeder Windung der Wendel durch eine Materialquerschnittsverengung vorgesehen oder erzeugt wird.

2. Verfahren nach Anspruch 1, **dadurch gekennzeichnet, dass** der Metallkörper (1, 13) nach dem Gießen und vor dem Komprimieren bearbeitet wird, insbesondere durch Schleifen und/oder Polieren und/oder Beschichten.

3. Verfahren nach einem der Ansprüche 1 oder 2, **dadurch gekennzeichnet, dass** zum Komprimieren des wendelförmigen Metallkörpers (1, 13) dieser auf einen Dorn (7) mit einem freien Ende (7a) und einer ersten Anschlagschulter (7b) aufgeschoben wird und dass das freie Ende (7a) des Dorns in eine Aufnahme (8) mit einer zweiten Anschlagschulter (8a) soweit eingeschoben wird, dass der Metallkörper zwischen den Anschlagschultern (7b, 8a) komprimiert wird.

4. Verfahren nach einem der Ansprüche 1 bis 3, **dadurch gekennzeichnet, dass** wenigstens zwei Verformungsbereiche (10, 11, 12 13) in jeder Windung der Wendel vorgesehen oder erzeugt werden.

5. Verfahren nach einem der Ansprüche 1 bis 4, **dadurch gekennzeichnet, dass** der Metallkörper (1') nach dem Komprimieren durch Fixierungsmittel (9) bezüglich seiner Länge fixiert wird.

6. Verfahren zur Herstellung eines wendelförmigen Metallkörpers (1') nach einem der Ansprüche 1 bis 5, **dadurch gekennzeichnet, dass** zunächst ein verlorener Modellkörper, beispielsweise ein Schäumling für ein Lost-Foam-Verfahren, insbesondere aus einem nicht metallischen Material, in der gewünschten Zielform des komprimierten gewendelten Metallkörpers (1') hergestellt wird, dass der Modellkörper durch eine Vorverformung entlang der Längsachse expandiert wird und dass der expandierte Modellkörper als Positivform für das Gießen des vorgeformten Metallkörpers (1) verwendet wird, insbesondere durch Herstellen einer Form für das Gießverfahren mithilfe des Modellkörpers oder durch Verwendung in einem Ausschmelzverfahren.

## Claims

1. A method for producing a helical metal body (1'), in which a preformed, helical metal body (1, 13) is first produced in a mold by a casting process and then compressed by deformation along its longitudinal axis (6), wherein at least one, in particular at least two, deformation regions (10, 11, 12, 13) are provided or produced in each turn (3, 4, 5) of the helix during the production of the preformed metal body (1, 13), which regions are first plastically deformed when the metal body is compressed, wherein the at least one deformation region is provided or produced in each turn of the helix by a material cross-sectional constriction.

2. The method according to claim 1, **characterized in that** the metal body (1, 13) is processed after casting and before compression, in particular by grinding and/or polishing and/or coating.

3. The method according to one of claims 1 or 2, **characterized in that**, in order to compress the helical metal body (1, 13), it is pushed onto a mandrel (7) having a free end (7a) and a first stop shoulder (7b), and **in that** the free end (7a) of the mandrel is pushed into a receptacle (8) with a second stop shoulder (8a) until the metal body is compressed between the stop shoulders (7b, 8a).

4. The method according to one of claims 1 to 3, **characterized in that** at least two deformation regions (10, 11, 12 13) are provided or produced in each turn of the helix.

5. The method according to one of claims 1 to 4, **characterised in that** after the compression, the metal body (1') is fixed with respect to its length by fixing means (9).

6. The method for the production of a helical metal body (1') according to one of claims 1 to 5, **characterised in that** firstly a lost model body, for example a foam part for a lost foam method, in particular made of a non-metallic material, is produced in the desired target shape of the compressed coiled metal body (1') **in that** the model body is expanded by predeformation along the longitudinal axis and **in that** the expanded model body is used as positive mould for the casting of the predeformed metal body (1), in particular by producing a mould for the casting method with the help of the model body or by use in a melting method.

## Revendications

1. Procédé de fabrication d'un corps métallique hélicoïdal (1'), lors duquel un corps métallique hélicoïdal (1, 13) préformé est d'abord fabriqué grâce à un procédé de coulée dans un moule, puis comprimé par déformation le long de son axe longitudinal (6), dans lequel, lors de la fabrication du corps métallique (1, 13) préformé, au moins une, en particulier au moins deux régions de déformation (10, 11, 12, 13) sont prévues ou produites au sein de chaque spire (3, 4, 5) de l'hélice, lesquelles régions étant d'abord déformées de manière plastique lors de la compression du corps métallique, dans lequel la au moins une région de déformation de chaque spire de l'hélice est prévue ou produite grâce à un rétrécissement de section transversale du matériau.

2. Procédé selon la revendication 1, **caractérisé en ce que** le corps métallique (1, 13) est traité après la coulée et avant la compression, en particulier par meulage et/ou polissage et/ou revêtement.

3. Procédé selon la revendication 1 ou 2, **caractérisé en ce que**, afin de comprimer le corps métallique hélicoïdal (1, 13), celui-ci est poussé sur un mandrin (7) muni d'une extrémité libre (7a) et d'un premier épaulement de butée (7b) et **en ce que** l'extrémité libre (7a) du mandrin est poussée dans un logement (8) muni d'un second épaulement de butée (8a) jusqu'à ce que le corps métallique soit comprimé entre les épaulements de butée (7b, 8a).

4. Procédé selon l'une quelconque des revendications 1 à 3, **caractérisé en ce qu'**au moins deux régions de déformation (10, 11, 12, 13) sont prévues ou produites dans chaque spire de l'hélice.

5. Procédé selon l'une quelconque des revendications 1 à 4, **caractérisé en ce que**, après la compression, le corps métallique (1') est immobilisé dans sa longueur grâce à des moyens d'immobilisation (9).

6. Procédé de fabrication d'un corps métallique hélicoïdal (1) selon l'une quelconque des revendications 1 à 5, **caractérisé en ce qu'**un corps modèle perdu, par exemple une mousse destinée à un procédé de fabrication à mousse perdue, est d'abord fabriqué dans la forme cible souhaitée du corps métallique hélicoïdal (1') comprimé, en particulier à partir d'un matériau non métallique, **en ce que** le corps modèle est expansé le long de l'axe longitudinal grâce à une prédéformation, et **en ce que** le corps modèle expansé est utilisé comme moule positif pour la coulée du corps métallique (1) préformé, en particulier par fabrication d'un moule destiné au procédé de coulée à l'aide du corps modèle ou par une utilisation dans un procédé de moulage à la cire perdue.
